# FASCICULE DE BREVET EUROPEEN

(11) **EP 3 870 812 B1**
(45) Date de publication et mention de la délivrance du brevet: **03.08.2022**
(21) Numéro de dépôt: 19817390.8
(22) Date de dépôt: 21.10.2019
(51) Int. Cl.: F01D 15/10, F02C 7/268, F02C 7/36

(54) **TURBOMACHINE D'AÉRONEF EQUIPÉE D'UNE MACHINE ÉLECTRIQUE**
FLUGZEUGTURBOMASCHINE AUSGERÜSTET MIT EINER ELEKTRISCHEN MASCHINE
AIRCRAFT TURBOMACHINE EQUIPPED WITH AN ELECTRICAL MACHINE

(30) Priorité: 26.10.2018 FR 1859944
(43) Date de publication de la demande: 01.09.2021
(73) Titulaire: SAFRAN AIRCRAFT ENGINES, 75015 Paris (FR)
(72) Inventeur: GUILLOTEL, Loïc, Paul, Yves, 77550 MOISSY-CRAMAYEL (FR); CHARIER, Gilles, Alain, Marie, CRAMAYEL 77550 (FR); FRANTZ, Caroline, Marie, CRAMAYEL 77550 (FR); MILLIER, Vincent, François, Georges, 77550 MOISSY-CRAMAYEL (FR)
(74) Mandataire: Gevers & Orès
(86) Numéro de dépôt international: PCT/FR2019/052499
(87) Numéro de publication internationale: WO 2020/084240

(56) Documents cités:
- EP-A2- 2 337 192
- FR-A1- 3 054 264
- US-A1- 2004 255 590

## Description

### DOMAINE TECHNIQUE

La présente invention concerne une turbomachine d'aéronef équipée d'une machine électrique.

### ETAT DE L'ART

L'état de l'art comprend notamment le document FR-A1-3 054 264 qui décrit une turbomachine d'aéronef équipée d'une machine électrique.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend au moins un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en énergie mécanique. Ce processus est réversible et peut servir à produire de l'électricité à partir d'une énergie mécanique.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

L'intégration d'une machine électrique de forte puissance sur le corps basse pression d'une turbomachine, en particulier de type à grand taux de dilution, s'avère très complexe. Plusieurs zones d'installation sont possibles mais les avantages et les inconvénients de chacune sont nombreux et divers (problème d'intégration mécanique de la machine, tenue en température de la machine, accessibilité de la machine, etc.).

Un des problèmes majeurs de l'intégration d'une machine électrique dans une turbomachine est d'avoir un environnement capable d'accepter la température limitée des composants de celle-ci (environ 150°C). De plus, le rendement global de la machine étant forcement inférieur à 100%, la chaleur dégagée par les pertes doit être évacuée. Sur des tailles de machine de plus de 1MW, la puissance dissipée est alors importante (50KW mini). Une solution consisterait à refroidir le stator de la machine avec de l'huile. Cependant, si la machine se trouve dans une enceinte huile, celle-ci peut alors directement fuir dans l'enceinte avec des risques de pollution par des particules issues de la machine. Si la machine est dans un environnement sec, le circuit de refroidissement doit dans ce cas être étanche et il faut alors être capable de récupérer les éventuelles fuites. Le refroidissement à l'huile présente donc des inconvénients.

D'autres inconvénients concernent les aspects dimensionnels :
- pour réduire l'encombrement d'une machine électrique, on cherche à augmenter la vitesse de rotation de son rotor, ce qui a toutefois comme impact une baisse du couple de rotation de la machine,
- par contre, suivant la technologie de machine et son lieu d'implantation, la vitesse de rotation ne peut excéder une certaine valeur pour éviter des vitesses périphériques du rotor trop importantes pouvant induire des problèmes sur ce dernier (décollement des aimants, éclatement, etc.).

La présente invention propose une solution à au moins une partie des problèmes évoqués dans ce qui précède.

### EXPOSE DE L'INVENTION

L'invention propose une turbomachine d'aéronef, comportant un générateur de gaz et une soufflante disposée en amont du générateur de gaz et configurée pour générer un flux principal de gaz dont une partie s'écoule dans une veine du générateur de gaz pour former un flux primaire, et dont une autre partie s'écoule dans une veine autour du générateur de gaz pour former un flux secondaire, le générateur de gaz comportant un corps basse pression qui comprend un rotor entraînant la soufflante par l'intermédiaire d'une couronne d'un réducteur mécanique du type planétaire, la turbomachine comportant en outre une machine électrique qui comprend un rotor et un stator s'étendant autour du rotor, caractérisée en ce que la machine électrique est montée coaxialement autour du réducteur et son rotor est entraîné en rotation par la couronne du réducteur.

La présente invention propose ainsi une solution d'intégration d'une machine électrique, un premier avantage étant lié au fait que, dans la zone d'intégration de cette machine, les températures qui y règnent sont relativement faibles et donc optimales pour cette machine. Lorsque la machine électrique est en fonctionnement moteur, elle ajoute du couple sur le réducteur. En fonctionnement générateur, elle prélève du couple sur le réducteur pour fournir une puissance électrique. Ainsi, par l'intermédiaire de l'arbre de soufflante, un apport d'énergie est fourni pour participer à la mise en rotation de la soufflante.

L'intégration de la machine électrique autour du réducteur permet de se positionner à une valeur de rayon importante tout en tournant au régime de rotation de la soufflante. Cela permet d'avoir une vitesse périphérique optimale au niveau de l'entrefer de la machine électrique permettant d'intégrer une solution de machine, notamment machine synchrone à aimants permanents, qui reste dans les pratiques actuelles.

En intégrant la machine électrique autour du réducteur, on peut également envisager de communaliser le refroidissement du réducteur et de la machine électrique. En effet, la machine électrique a un besoin en refroidissement important, tout comme le réducteur.

Cette intégration permet également :
- de limiter l'impact de l'intégration d'une telle machine sur la longueur moteur,
- de bénéficier du carter d'entrée de la turbomachine pour assurer facilement le routage des servitudes (canalisations, harnais,...) nécessaires au fonctionnement de cette machine électrique.

Par ailleurs, La présente invention porte sur une solution d'intégration d'une machine électrique de forme annulaire dans une turbomachine comprenant un réducteur en configuration planétaire. La présente invention propose donc d'entrainer une machine électrique par la couronne planétaire.

La turbomachine selon l'invention peut comprendre une ou plusieurs des caractéristiques suivantes, prises isolément les unes des autres ou en combinaison les unes avec les autres :
- le stator de la machine électrique est entouré par une virole annulaire délimitant intérieurement une veine d'écoulement du flux primaire,
- la turbomachine comprend un carter d'entrée qui entoure le réducteur et la machine électrique, le stator de la machine électrique étant fixé à ce carter d'entrée,
- le réducteur comprend un porte-satellites fixé au carter d'entrée,
- le stator de la machine électrique est fixé à une bride annulaire amont dudit carter d'entrée, et le porte-satellites du réducteur est fixé à une bride annulaire aval du carter d'entrée,
- le rotor est intégré ou fixé à la couronne qui comprend une denture interne droite ou en chevron,
- la couronne comprend une denture en chevron à double hélice, la couronne comportant deux demi-couronnes comportant chacune une hélice, le rotor étant intégré ou fixé à l'une des demi-couronnes,
- les demi-couronnes sont fixées entre elles et à une bride aval d'un arbre de sortie du réducteur, l'extrémité amont de cet arbre de sortie étant accouplée à un arbre de la soufflante, et
- le réducteur comprend un solaire accouplé par un arbre d'entrée à un arbre principal du corps basse pression.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en coupe axiale d'une turbomachine d'aéronef à fort taux de dilution et réducteur ;
- la figure 2 est une demi vue schématique partielle en coupe axiale d'une turbomachine d'aéronef selon l'invention équipée d'une machine électrique ; et
- la figure 3 est une vue à plus grande échelle d'un détail de la figure 2.

### DESCRIPTION DETAILLEE

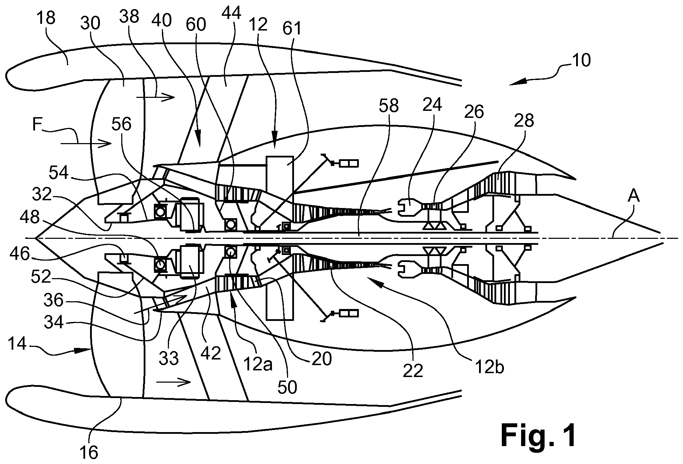

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter de soufflante 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

Les compresseurs basse pression 20 et haute pression 22 sont séparés l'un de l'autre par un carter intermédiaire 61.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui alimente le générateur de gaz 12, et en un flux annulaire radialement externe, appelé flux secondaire 38 qui s'écoule entre le générateur de gaz 12 et la nacelle 18 et fournit la majeure partie de la poussée de la turbomachine.

Un carter d'entrée 40 relie structurellement le générateur de gaz 12 au carter de soufflante 16 et à la nacelle 18. Comme c'est le cas du carter intermédiaire 61, le carter d'entrée 40 comprend une rangée annulaire de bras 42 radialement internes s'étendant dans le flux primaire 36, et une rangée annulaire d'aubes redresseurs 44 (du type OGV) radialement externes s'étendant dans le flux secondaire 38. Les bras 42 sont en général en nombre limité (moins de dix) et sont tubulaires et traversés par des servitudes. Le nombre d'aubes 44 (IGV) peut être supérieur à 10.

Le rotor du corps basse pression 12a ainsi que l'arbre de soufflante 32 sont guidés à l'amont par des paliers 46, 48 et 50. Ces paliers 46, 48, 50 sont du type à billes ou à rouleaux et comprennent chacun une bague interne montée sur l'arbre à guider, une bague externe portée par un support annulaire de paliers et un roulement entre les bagues.

Le palier 50 est porté par un support de palier 60 et permet de guider l'arbre d'entrée 56 du réducteur 33. Les paliers 46, 48 sont portés par un support de paliers 60 et permettent de guider l'arbre de sortie 54 du réducteur 33.

Les supports de paliers 52, 60 s'étendent autour de l'axe A et sont des pièces fixes reliées au stator et par exemple au carter d'entrée 40.

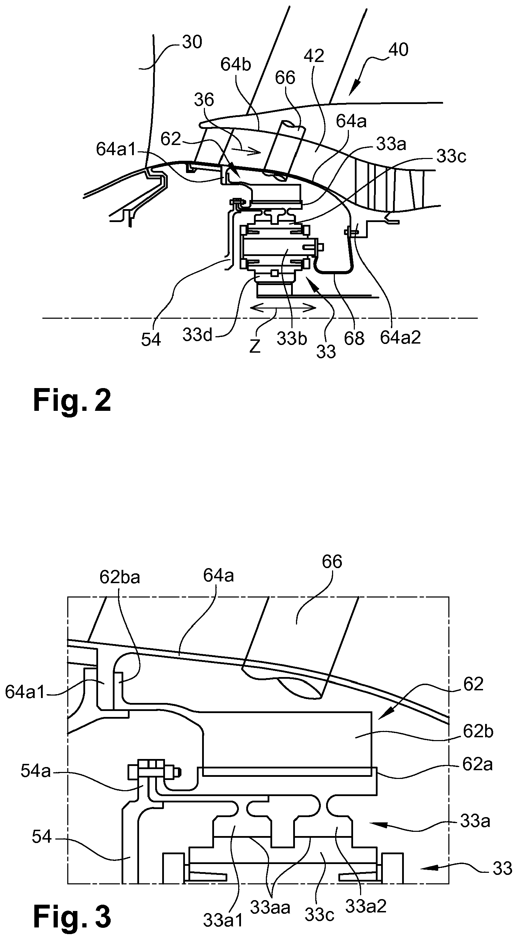

La figure 2 est une vue à plus grande échelle d'une partie d'une turbomachine et illustre une zone d'installation d'une machine électrique 62, cette zone Z étant ici celle du réducteur 33.

Plus exactement, la machine électrique 62 a une forme générale annulaire et sa zone d'installation Z s'étend radialement entre le réducteur 33 et le carter d'entrée 40 et plus particulièrement entre la couronne 33a et les aubes 44.

La machine 62 comprend un rotor 62a et un stator 62b. Le rotor 62a a une forme générale annulaire autour de l'axe A et est solidaire en rotation d'une couronne 33a du réducteur 33. Le stator 62a a une forme générale annulaire autour de l'axe A. Il s'étend autour du rotor 62a et est solidaire du carter d'entrée 40.

Le carter d'entrée 40 comprend deux viroles annulaires coaxiales, respectivement interne 64a et externe 64b, qui délimitent entre elles la veine d'écoulement du flux primaire 36 et qui sont reliées entre elles par les bras 42 précités. La virole interne 64a entoure la machine électrique 62 et en particulier son stator 62b et comprend une bride annulaire radialement interne 64a1 de fixation d'une bride annulaire amont 62ba solidaire du stator 62b (figure 3). Dans l'exemple représenté, la virole 64a s'étend à distance radiale du stator 62b mais elle pourrait être montée ajustée sur le stator, de façon notamment à faciliter son refroidissement par conduction thermique, du fait du balayage de la virole 64a par le flux primaire 36 en fonctionnement.

La machine électrique 62 et en particulier son stator 62b est relié à un câble électrique 66 qui traverse un des bras tubulaires 42 du carter d'entrée 40. Ce câble 66 permet d'alimenter en électricité et de commander la machine électrique 62.

Le réducteur 33 est du type planétaire de façon à ce que sa couronne 33a soit mobile en rotation et puisse entraîner le rotor 62a de la machine électrique 62.

Le réducteur 33 a donc un porte-satellites 33b fixe et qui est par exemple fixé au carter d'entrée 40. Comme cela est visible à la figure 2, le porte-satellites 33b peut être fixé par un organe de liaison 68 à une bride annulaire aval 64a2 du carter d'entrée 40 ou de sa virole 64a.

Dans l'exemple représenté, la couronne 33a du réducteur 33 entraîne la soufflante et est du type à denture interne 33aa en chevron, c'est-à-dire à double hélice. Cette denture interne 33aa est destinée à coopérer avec une denture externe complémentaire de chaque satellite 33c du réducteur 33.

La couronne 33a comprend deux demi-couronnes 33a1, 33a2 coaxiales et comportant chacune une des hélices de la denture interne 33aa. Ces demi-couronnes 33a1, 33a2 sont disposées de manière adjacente et sont reliées entre elles par des brides annulaires radialement externes qui sont en outre fixées à une bride annulaire radialement externe 54a de l'extrémité aval de l'arbre de sortie 54 du réducteur 33. L'extrémité amont de cet arbre de sortie 54 est accouplée à l'arbre de soufflante 32. L'arbre d'entrée 56 du réducteur 33 est accouplé respectivement au solaire 33d du réducteur et à l'arbre principal 58 du corps basse pression.

Le rotor 62a de la machine électrique 62 est fixé ou intégré à l'une des demi-couronnes 33a1, 33a2, à savoir celle disposée en aval dans l'exemple représenté.

Dans une variante de réalisation non représentée, la couronne 33a comprendrait une denture interne droite et serait formée d'une seule pièce. Le rotor de la machine électrique 62 serait alors intégré ou fixé à cette couronne qui serait fixée à la bride 54a de l'arbre de sortie 54.

Lorsque la machine électrique 62 est en fonctionnement moteur, elle ajoute du couple en sortie du réducteur 33 de manière à fournir plus de puissance à la soufflante. Une ou plusieurs batteries peuvent être installées dans l'aéronef et l'énergie électrique est amenée à la machine électrique 62 via le câble électrique 64. Cette énergie permet de mettre en rotation le rotor 62a de la machine électrique 62. L'énergie électrique est ainsi convertie en énergie mécanique. Via l'arbre de soufflante 34, un apport d'énergie est fourni pour participer à la mise en rotation de la soufflante 14.

En fonctionnement générateur, la machine électrique 62 prélève du couple sur le réducteur 33 pour fournir une puissance électrique. Le couple est transmis par l'arbre de turbine BP au réducteur 33 et transmis à la soufflante 14 et à la machine électrique 62. Celle-ci convertie l'énergie mécanique en énergie électrique pour alimenter le réseau électrique de l'avion : stockeur, propulseur électrique supplémentaire, équipement passager, conditionnement d'air cabine, etc.

Un des critères de dimensionnement des machines électriques est la vitesse périphérique du rotor (valeurs actuelles pour une machine synchrone à aimants permanents inférieures à 150, 200 m/s voire maxi 250 m/s). Or, dans une turbomachine, les vitesses périphériques des différents rotors peuvent être au-delà de ces limites. Pour diminuer cette vitesse périphérique, on peut soit diminuer le rayon où se positionne l'entrefer de la machine, soit diminuer la vitesse de rotation de cette dernière.

L'intégration de la machine électrique 62 autour du réducteur 33 permet de se positionner à une valeur de rayon importante tout en tournant au régime de rotation de la soufflante. Cela permet d'avoir une vitesse périphérique de 100m/s au niveau de l'entrefer de la machine, pour un régime donné, permettant ainsi d'intégrer une solution de machine, notamment machine synchrone à aimants permanents.

En intégrant la machine électrique autour du réducteur, on peut également envisager de communaliser : le refroidissement du réducteur et de la machine électrique les alimentations d'huile, l'emplacement des retours d'huile (passages dans les bras), les pompes d'alimentation, les échangeurs de circuit d'huile, etc.

Cette intégration permet également de limiter l'impact de l'intégration d'une telle machine sur la longueur moteur, et de bénéficier du carter d'entrée pour assurer facilement le routage des servitudes (canalisations, harnais,...) nécessaire au fonctionnement de cette machine électrique.

## Revendications

1. Turbomachine (10) d'aéronef, comportant un générateur de gaz (12) et une soufflante (14) disposée en amont du générateur de gaz et configurée pour générer un flux principal de gaz (F) dont une partie s'écoule dans une veine du générateur de gaz pour former un flux primaire (36), et dont une autre partie s'écoule dans une veine autour du générateur de gaz pour former un flux secondaire (38), le générateur de gaz comportant un corps basse pression (12a) qui comprend un rotor entraînant la soufflante par l'intermédiaire d'une couronne d'un réducteur mécanique (33) du type planétaire, la turbomachine comportant en outre une machine électrique (62) qui comprend un rotor (62a) et un stator (62b) s'étendant autour du rotor, **caractérisée en ce que** la machine électrique est montée coaxialement autour du réducteur et son rotor (62a) est entraîné en rotation par la couronne (33a) du réducteur.

2. Turbomachine (10) selon la revendication 1, dans laquelle le stator (62b) de la machine électrique (62) est entouré par une virole annulaire (64a) délimitant intérieurement une veine d'écoulement du flux primaire (36).

3. Turbomachine (10) selon la revendication 1 ou 2, dans laquelle elle comprend un carter d'entrée (40) qui entoure le réducteur (33) et la machine électrique (62), le stator (62b) de la machine électrique étant fixé à ce carter d'entrée.

4. Turbomachine (10) selon la revendication 3, dans laquelle le réducteur (33) comprend un porte-satellites (33b) fixé au carter d'entrée (40).

5. Turbomachine (10) selon l'ensemble des revendications 3 et 4, dans laquelle le stator (62b) de la machine électrique (62) est fixé à une bride annulaire amont (64a1) dudit carter d'entrée (40), et le porte-satellites (33b) du réducteur (33) est fixé à une bride annulaire aval (64a2) du carter d'entrée.

6. Turbomachine (10) selon l'une des revendications 1 à 5, dans laquelle le rotor (62a) est intégré ou fixé à la couronne (33a) qui comprend une denture interne droite ou en chevron.

7. Turbomachine (10) selon l'une des revendications 1 à 5, dans laquelle la couronne (33) comprend une denture (33aa) en chevron à double hélice, la couronne comportant deux demi-couronnes (33a1, 33b1) comportant chacune une hélice, le rotor (62a) étant intégré ou fixé à l'une des demi-couronnes.

8. Turbomachine (10) selon la revendication 7, dans laquelle les demi-couronnes (33a1, 33b1) sont fixées entre elles et à une bride aval (54a) d'un arbre de sortie (54) du réducteur (33), l'extrémité amont de cet arbre de sortie étant accouplé à un arbre (32) de la soufflante (14).

9. Turbomachine (10) selon l'une des revendications précédentes, dans laquelle le réducteur (33) comprend un solaire (33d) accouplé par un arbre d'entrée (56) à un arbre principal (58) du corps basse pression (12a).

## Patentansprüche

1. Flugzeugturbomaschine (10), die einen Gasgenerator (12) und ein Gebläse (14) aufweist, das stromaufwärts des Gasgenerators angeordnet und konfiguriert ist, um einen Hauptgasstrom (F) zu erzeugen, von dem ein Teil in einen Kanal des Gasgenerators strömt, um einen Primärstrom (36) zu bilden, und von dem ein anderer Teil in einen Kanal um den Gasgenerator strömt, um einen Sekundärstrom (38) zu bilden, wobei der Gasgenerator einen Niederdruckkörper (12a) aufweist, der einen Rotor umfasst, der das Gebläse über eine Krone eines mechanischen Untersetzungsgetriebe (33) vom Planetentyp antreibt, wobei die Turbomaschine weiter eine elektrische Maschine (62) umfasst, die einen Rotor (62a) und einen Stator (62b) umfasst, der sich um den Rotor herum erstreckt, **dadurch gekennzeichnet, dass** die elektrische Maschine koaxial um das Untersetzungsgetriebe herum angebracht ist und ihr Rotor (62a) durch die Krone (33a) des Untersetzungsgetriebes in Drehung versetzt wird.

2. Turbomaschine (10) nach Anspruch 1, wobei der Stator (62b) der elektrischen Maschine (62) von einer ringförmigen Halterung (64a) umgeben ist, die im Inneren einen Strömungskanal des Primärstroms (36) begrenzt.

3. Turbomaschine (10) nach Anspruch 1 oder 2, wobei sie ein Eingangsgehäuse (40) umfasst, welches das Untersetzungsgetriebe (33) und die elektrische Maschine (62) umgibt, wobei der Stator (62b) der elektrischen Maschine an diesem Eingangsgehäuse befestigt ist.

4. Turbomaschine (10) nach Anspruch 3, wobei das Untersetzungsgetriebe (33) einen Planetenträger (33b) umfasst, der am Eingangsgehäuse (40) befestigt ist.

5. Turbomaschine (10) nach der Gesamtheit der Ansprüche 3 und 4, wobei der Stator (62b) der elektrischen Maschine (62) an einem stromaufwärtigen ringförmigen Flansch (64a1) des Eingangsgehäuses (40) befestigt ist und der Planetenträger (33b) des Untersetzungsgetriebes (33) an einem stromabwärtigen ringförmigen Flansch (64a2) des Eingangsgehäuses befestigt ist.

6. Turbomaschine (10) nach einem der Ansprüche 1 bis 5, wobei der Rotor (62a) in die Krone (33a) integriert oder an dieser befestigt ist, die eine gerade oder pfeilgezahnte Innenverzahnung umfasst.

7. Turbomaschine (10) nach einem der Ansprüche 1 bis 5, wobei die Krone (33) eine pfeilgezahnte Doppelhelixverzahnung (33aa) aufweist, wobei die Krone zwei Halbkronen (33a1, 33b1) aufweist, die jeweils eine Helix aufweisen, wobei der Rotor (62a) in eine der Halbkronen integriert oder an dieser befestigt ist.

8. Turbomaschine (10) nach Anspruch 7, wobei die Halbkronen (33a1, 33b1) untereinander und an einem stromabwärtigen Flansch (54a) einer Ausgangswelle (54) des Untersetzungsgetriebes (33) befestigt sind, wobei das stromaufwärtige Ende dieser Ausgangswelle mit einer Welle (32) des Gebläses (14) gekoppelt ist.

9. Turbomaschine (10) nach einem der vorstehenden Ansprüche, wobei das Untersetzungsgetriebe (33) ein Sonnenrad (33d) umfasst, das über eine Eingangswelle (56) mit einer Hauptwelle (58) des Niederdruckkörpers (12a) gekoppelt ist.

## Claims

1. An aircraft turbine engine (10), comprising a gas generator (12) and a fan (14) arranged upstream of the gas generator and configured to generate a main gas flow (F), part of which flows in a duct of the gas generator to form a primary flow (36), and another part of which flows in a duct around the gas generator to form a secondary flow (38), the gas generator comprising a low pressure body (12a) which comprises a rotor driving the fan by means of a ring gear of a mechanical reduction gear (33) of the planetary type, the turbine engine further comprising an electrical machine (62) which comprises a rotor (62a) and a stator (62b) extending around the rotor, **characterised in that** the electrical machine is mounted coaxially around the reduction gear and its rotor (62a) is driven in rotation by the ring gear (33a) of the reduction gear.

2. The turbine engine (10) according to claim 1, wherein the stator (62b) of the electrical machine (62) is surrounded by an annular shroud (64a) internally bounding a flow duct of the primary flow (36).

3. The turbine engine (10) according to claim 1 or 2, wherein it comprises an inlet casing (40) which surrounds the reduction gear (33) and the electrical machine (62), the stator (62b) of the electrical machine being attached to this inlet casing.

4. The turbine engine (10) according to claim 3, wherein the reduction gear (33) comprises a planet carrier (33b) attached to the inlet casing (40).

5. The turbine engine (10) according to all of claims 3 and 4, wherein the stator (62b) of the electrical machine (62) is attached to an upstream annular flange (64a1) of said inlet casing (40), and the planet carrier (33b) of the reduction gear (33) is attached to a downstream annular flange (64a2) of the inlet casing.

6. The turbine engine (10) according to any of claims 1 to 5, wherein the rotor (62a) is integrated with or attached to the ring gear (33a) which comprises an internal spur or herringbone toothing.

7. The turbine engine (10) according to any one of claims 1 to 5, wherein the ring gear (33) comprises a double helix herringbone toothing (33aa), the ring gear comprising two half-ring gears (33a1, 33b1) each comprising a helix, the rotor (62a) being integrated with or attached to one of the half-ring gears.

8. The turbine engine (10) according to claim 7, wherein the half-ring gears (33a1, 33b1) are attached to each other and to a downstream flange (54a) of an output shaft (54) of the reduction gear (33), the upstream end of this output shaft being coupled to a shaft (32) of the fan (14).

9. The turbine engine (10) according to any of the preceding claims, wherein the reduction gear (33) comprises a sun gear (33d) coupled by an input shaft (56) to a main shaft (58) of the low pressure body (12a).
